# EUROPÄISCHE PATENTSCHRIFT

(11) **EP 2 806 218 B1**
(45) Veröffentlichungstag und Bekanntmachung des Hinweises auf die Patenterteilung: **25.04.2018**
(21) Anmeldenummer: 14166961.4
(22) Anmeldetag: 05.05.2014
(51) Int. Cl.: F24D 3/08, F24D 12/02, F24D 19/10

(54) **Gekoppeltes Heizungssystem und Verfahren zum Betreiben eines gekoppelten Heizungssystems**
Coupled heating system and method for operating a coupled heating system
Système de chauffage couplé et procédé de fonctionnement d'un système de chauffage couplé

(30) Priorität: 13.05.2013 AT 3892013
(43) Veröffentlichungstag der Anmeldung: 26.11.2014
(73) Patentinhaber: Vaillant GmbH, 42859 Remscheid (DE)
(72) Erfinder: Wegner, Alexander, 45881 Gelsenkirchen (DE)
(74) Vertreter: Popp, Carsten

(56) Entgegenhaltungen:
- EP-A1- 2 463 591
- EP-A2- 1 939 541
- FR-A1- 2 550 605
- US-A1- 2008 179 415

## Beschreibung

Die Erfindung betrifft ein gekoppeltes Heizungssystem und ein Verfahren zum Betreiben eines gekoppelten Heizungssystems.

Unter einem gekoppelten Heizungssystem wird ein System aus zwei Wärmequellen verstanden, wobei eine erste Wärmequelle bei vergleichsweise niedriger Leistung einer Grundlast bereitstellt und eine zweite Wärmequelle bei höherer Leistung zum Abdecken der Spitzenlast oder zum Erreichen von höheren Temperaturen verwendet wird. Dabei wird die zweite Wärmequelle nur bei Bedarf dazugeschaltet.

Kraft-Wärme-Kopplungs-Anlagen (KWK-Anlagen) zum Beispiel werden auf lange Laufzeiten, auch in der Übergangszeit, ausgelegt, daher reicht die thermische Leistung der KWK-Wärmequelle in der Regel nicht zur Abdeckung der heizungsseitigen Spitzenlast und zur Erzeugung von häuslichem Warmwasser nach dem Durchlaufprinzip. Daher wird die KWK-Wärmequelle mit Zusatzheizern und Speichern als Heizungspuffer oder Trinkwasserspeicher kombiniert. Hierdurch können Wärmeerzeugung und Nutzung zeitlich entkoppelt und dadurch die Laufzeit der KWK-Einheit maximiert werden. Soll kein Speicher eingesetzt werden, kann Warmwasser auch nach dem Durchflussprinzip erzeugt werden. In Verbindung mit Kraft-Wärme-Kopplung erfolgt dies immer, zumindest anteilig, durch einen Spitzenlastbrenner. Dieser dient auch zur Abdeckung der heizungsseitigen Spitzenlast.

Aus der Patentanmeldung DE 102 55 900 A1 ist es bekannt, ein gattungsgemäßes Heizungssystem bestehend aus einem Brennstoffzellenheizgerät und einem Zusatzheizgerät mit einer hydraulischen Weiche miteinander zu verbinden. Dabei ist das Zusatzheizgerät vorgesehen, um bei hohem Wärmebedarf Wärme zu erzeugen. Das Brennstoffzellenheizgerät, welches die erste Wärmequelle mit niedriger Leistung für die Grundlast darstellt und das Zusatzheizgerät, welches zum Abdecken der Spitzenlast vorgesehen ist, sind über eine hydraulische Weiche miteinander verbunden. Eine hydraulische Weiche hat jedoch den Nachteil, dass die Volumenströme der Wärmesenken und Wärmequellen genau aufeinander abgestimmt sein müssen. Anderenfalls kommt es zu Energieverlusten. Zudem ist für jeden angeschlossenen Zweig eine eigene Pumpe erforderlich.

Aus der Patentanmeldung FR 2 550 605 A1 ist ein Heizungssystem bekannt, bei dem in ein bestehendes Heizungssystem bestehend aus einer ersten Wärmequelle in Form eines konventionellen Heizkessels und aus einer Wärmesenke mithilfe eines Vierwegeventils eine zweite Wärmequelle in Form einer Wärmepumpe so eingebunden wird, dass je nach Stellung des Ventils entweder die erste Wärmequelle die Wärmesenke alleine beheizt oder die zweite und die erste Wärmequelle ineinander geschaltet werden oder dass in einer dritten Stellung des Ventils die zweite Wärmequelle einen Teilstrom des Wärmeträgermediums erwärmt. Das Vierwegeventil wird vom Monteur eingestellt.

In der Patentanmeldung EP 1 939 541 A2 wird eine Heizungsanlage offenbart, bei der mithilfe eines parallel zum Wärmetauscher der Wärmequelle geschalteten Bypasses ein Teilstrom des Wärmeträgermediums und dem Wärmetauscher vorbeigeführt wird, wenn der Durchsatz aus der Wärmesenke größer ist als der durch den Wärmetauscher.

Die Patentanmeldung EP 2 463 591 A1 zeigt ein Heizungssystem mit einer Wärmepumpe und einem Boiler zur Beheizung einer Wärmesenke. Die Wärmepumpe und der Boiler sind über eine hydraulische Weiche koordiniert. Über ein Dreiwegeventil kann eine weitere Wärmesenke von dem Boiler beheizt werden.

Es ist Aufgabe der Erfindung, ein einfach aufgebautes und kostengünstiges gattungsgemäßes Heizungssystem bereitzustellen, welches die oben genannten Energieverluste vermeidet.

Diese Aufgabe wird erfindungsgemäß durch ein Heizungssystem gemäß Anspruch 1 sowie durch ein Verfahren zum Betreiben eines Heizungssystems gemäß dem unabhängigen Anspruch gelöst. Dazu wird die erste Wärmequelle, die beispielsweise die Grundlast bereitstellt und eine vergleichsweise niedrige Leistung aufweisen kann, und die zweite Wärmequelle, die als Zusatzheizgerät für Spitzenlasten vorgesehen ist, in Reihe geschaltet. Für den Heizkreis bedeutet dies, dass in Fließrichtung des Wärmeträgermedium die erste Wärmequelle, die zweite Wärmequelle und die erste Wärmesenke hintereinander angeordnet sind. Parallel zur ersten Wärmequelle und zur zweiten Wärmequelle sind Rückschlagventile angeordnet, wobei die Durchflussrichtung der Rückschlagventile so ausgerichtet ist, dass das Wärmeträgermedium sowohl durch die Wärmequelle als auch durch das Rückschlagventil strömen kann. Dadurch wird eine aufwändige Anordnung von durch eine Steuerung anzusteuernden 3-Wege-Ventilen vermieden. Der Durchfluss durch die Rückschlagventile ergibt sich automatisch aufgrund der Volumenströme der Umwälzpumpen der Wärmequellen. Die erste Wärmesenke kann im Sinne der Erfindung auch mehrere Elemente umfassen. So ist beispielsweise bei einer Gebäude-Heizung mit mehreren Radiatoren nicht jeder einzelne Radiator, sondern die Gebäude-Heizung als Ganzes als erste Wärmesenke zu verstehen.

Die Vorteile des erfindungsgemäßen Heizungssystems sind eine höhere Betriebssicherheit, da zwei unabhängige Heizgeräte bereitstehen. Bei Ausfall einer der Wärmequellen wird die Wärme- und Warmwasserversorgung durch die andere Wärmequelle sichergestellt. Zudem kann die zweite Wärmequelle für die Funktion des Zusatzheizgeräts auf einem handelsüblichen Kombiwasserheizer basieren.

In einer bevorzugten Ausführungsform der Erfindung ist der Volumenstrom der Umwälzpumpen der zweiten Wärmequelle größer als der ersten Wärmequelle. Dies ergibt sich aus der höheren Leistung der zweiten Wärmequelle. Erfindungsgemäß eingeschlossen ist aber auch eine höhere Leistung bei gleichem Volumenstrom oder ein höherer Volumenstrom unabhängig von der Leistung.

In einer Weiterbildung der Erfindung umfasst das Heizungssystem eine zweite Wärmesenke, beispielsweise eine Warmwasserbereitung. Zur Erwärmung des Wassers ist die zweite Wärmequelle mittels eines 3-Wege-Ventils direkt mit der zweiten Wärmesenke verbindbar.

Weitere vorteilhafte Ausführungsformen ergeben sich aus den Merkmalen der abhängigen Ansprüche.

In einer bevorzugten Ausführungsvariante ist das Rückschlagventil für die zweite Wärmequelle außerhalb der zweiten Wärmequelle angeordnet, besonders bevorzugt innerhalb der ersten Wärmequelle. Dadurch ist es möglich, handelsübliche Heizgeräte ohne Modifikationen als Zusatzheizgerät einzusetzen.

In einem Verfahren zum Betreiben des erfindungsgemäßen Heizungssystems werden die erste Wärmequelle und die zweite Wärmequelle mit demselben Temperatursollwert für die Wärmesenke betrieben. Alternativ könnte ein Steuergerät übergeordnet sein, das die Temperaturen beider Wärmequellen koordiniert. Dieses Steuergerät wird jedoch eingespart, wenn die erste Wärmequelle und die zweite Wärmequelle mit demselben Temperatursollwert betrieben werden. Dies hat zur Folge, dass die zweite Wärmequelle das Wärmeträgermedium nur dann erwärmt, wenn die Temperatur durch die erste Wärmequelle nicht ausreichend ist.

Ein weiterer Verfahrensaspekt ist, die zweite Wärmesenke durch eine entsprechende Stellung des 3-Wege-Ventils direkt mit der ersten oder zum Erreichen von höheren Temperaturen mit der zweiten Wärmequelle bzw. mit beiden Wärmequellen zu verbinden.

Ebenfalls kann das erfindungsgemäße Heizungssystem so betrieben werden, dass ein Teilstrom des Wärmeträgermediums bei Nichtbetrieb der zweiten Wärmequelle durch den Wärmetauscher der zweiten Wärmequelle geleitet wird und ihn erwärmt. Dadurch wird eine Komfortfunktion erreicht, in der in kürzerer Zeit beim Zapfen von Warmwasser die gewünschte Temperatur erreicht wird.

Die Erfindung wird nun anhand der Figuren detailliert erläutert.

Es stellen dar:
- Figur 1:: Ein Prinzipbild des erfindungsgemäßen Heizungssystems.
- Figur 2:: Eine Ausführungsvariante des Heizungssystems aus Figur 1.
- Figur 3 - 4: Verschiedene Betriebszuständer des erfindungsgemäßen Heizungssystems.

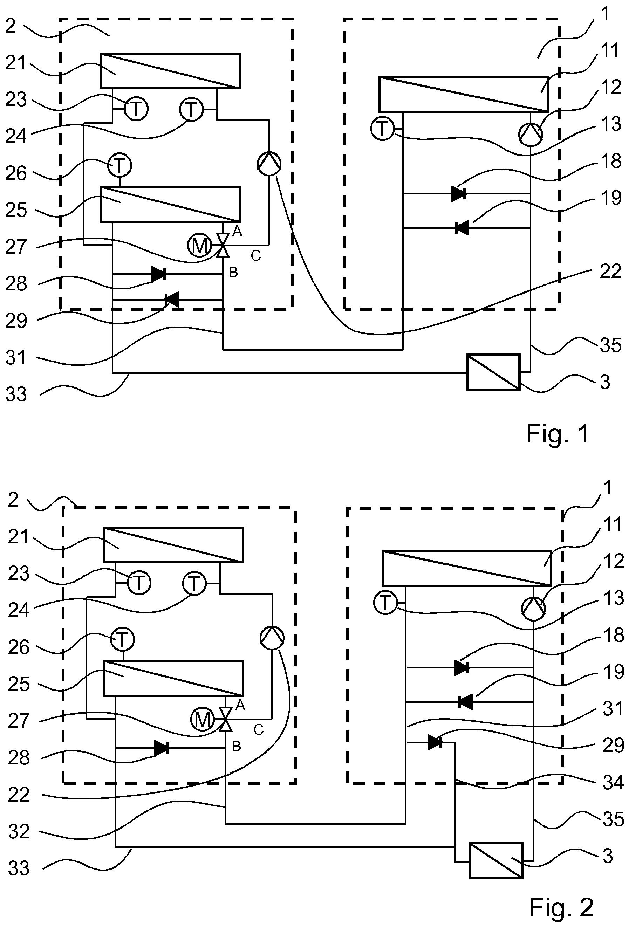

Figur 1 zeigt ein Prinzipbild des erfindungsgemäßen Heizungssystems. Das Heizungssystem wird gebildet aus einer ersten Wärmequelle 1, einer zweiten Wärmequelle 2 und einer ersten Wärmesenke 3, die jeweils in Reihe geschaltet sind.

Bei der erste Wärmequelle 1 handelt es sich um eine Wärmequelle für die Grundlast, in der Regel mit einer relativ niedrigen Leistung. Dabei kann es sich beispielsweise um eine Solaranlage, eine Wärmepumpe oder besonders bevorzugt um eine KWK-Einheit handeln. Die KWK-Einheit besteht aus dem eigentlichen Strom- und Wärmeerzeuger und hydraulischen Komponenten zur Wärmenutzung. Der Strom- und Wärmeerzeuger kann z.B. eine Brennstoffzelle, Verbrennungs- oder Stirlingmotor sein. In allen Fällen wird die ausgekoppelte Wärme über einen oder mehrere Wärmetauscher 11 an einen Wärmeträgerkreislauf übertragen. Die übrigen Teile des Strom- und Wärmeerzeugers, der Solaranlage oder der Wärmepumpe sind hier nicht dargestellt. Das Wärmeträgermedium, in der Regel Wasser, wird durch eine erste Umwälzpumpe 12 umgewälzt. Hinter dem ersten Wärmetauscher 11 ist ein erster Temperatursensor 13 angeordnet, der die Temperatur hinter dem Wärmetauscher erfasst. Dieser Temperatursensor wird für die Temperaturregelung verwendet. Ein erster Bypass 18 ist vorgesehen, um beispielsweise bei verschlossenen Heizungsventilen Störungen im Heizungssystem zu vermeiden. Derartige Bypassventile sind bei Heizgeräten üblicher Stand der Technik.

Bei der zweiten Wärmequelle 2 handelt es sich um eine Wärmequelle für die Spitzenlast. Dabei kann es sich beispielsweise um einen Heizkessel oder ein Kombiheizgerät zum kombinierten Heizen und Warmwasserbereiten handeln. Die Wärme wird über einen zweiten Wärmetauscher 21 an den Wärmeträgerkreislauf übertragen. Das Wärmeträgermedium wird durch eine zweite Umwälzpumpe 22 umgewälzt. Vor und hinter dem zweiten Wärmetauscher 21 ist Temperatursensoren 23, 24 angeordnet, der die Temperatur vor und hinter dem Wärmetauscher 21 erfassen. Diese Temperatursensoren werden für die Temperaturregelung verwendet. Auch hier ist ein zweiter Bypass 28 vorgesehen, um Störungen im Heizungssystem zu vermeiden.

Der Wärmeträgerkreislauf schließt sich über die erste Wärmesenke 3. Mit dem erfindungsgemäßen Heizungssystem ist es möglich, durch den Betrieb der Umwälzpumpen 12, 22 verschiedene Betriebszustände darzustellen. Damit der Wärmeträgerkreislauf auch bei einer abgeschalteten Umwälzpumpe funktioniert, ist parallel zu den jeweiligen Umwälzpumpen 12, 22 und Wärmetauschern 11, 21 jeweils ein Rückschlagventil 19, 29 vorgesehen. Diese Rückschlagventile ermöglichen, dass das Wärmeträgermedium an der jeweiligen Umwälzpumpe 12, 22 und Wärmetauscher 11, 21 vorbei geleitet wird. Dies erspart ein zusätzliches 3-Wege-Ventil sowie dessen Ansteuerung. Somit ist es möglich entweder nur die erste Wärmequelle 1, nur die zweite Wärmequelle 2 oder beide Wärmequellen zu betreiben. Es ist auch möglich, die Umwälzpumpen 12, 22 mit unterschiedlichen Volumenströmen zu betreiben, da an der Umwälzpumpen mit dem niedrigeren Volumenstrom der Differenz-Volumenstrom über das Rückschlagventil vorbeigeführt wird.

Die zweite Wärmequelle umfasst zusätzlich optional eine zweite Wärmesenke 25 in Form eines zweiten Wärmetauschers mit Temperatursensor 26. Dabei ist die Wärmesenke nicht physikalisch als Teil der Wärmequelle zu verstehen, sondern nur als örtlich innerhalb der Baueinheit anzusehen. Dieser zweite Wärmetauscher ist vorgesehen, um Warmwasser zu bereiten. Dabei kann es sich entweder um einen Durchlauferhitzer handeln oder um einen Wärmetauscher zur Beheizung eines Warmwasserspeichers. Mittels des 3-Wege-Ventils 27 kann die zweite Wärmesenke 25 direkt mit dem zweiten Wärmetauscher 21 verbunden werden.

Aufgrund der vergleichsweise geringen Leistung der ersten Wärmequelle 1 ist für den ersten Wärmetauscher 11 ein entsprechend geringer Volumenstrom nötig. Die erste Umwälzpumpe 12 und/oder der erste Wärmetauscher 11 können daher kleiner dimensioniert werden als die zweite Umwälzpumpe 22, was Herstellkosten und Hilfsenergie im Betrieb spart. Über die Überströmventile 19, 29 werden die unterschiedlichen Volumenströme durch die beiden Wärmequellen 1, 2 ausgeglichen. Durch die erste Wärmesenke 3 fließt immer der höhere Volumenstrom.

Für den Heizbetrieb können beide Wärmequellen 1, 2 in beliebiger Kombination genutzt werden, wobei die erste Wärmequelle bevorzugt wird. Für den Warmwasserbetrieb, also für die Versorgung der zweiten Wärmesenke 25, ist das 3-Wege-Ventil 27 so schaltbar, dass der Zweig A-C verbunden ist. Die erste Wärmequelle 1 bleibt bei Wärmeanforderung in Betrieb und versorgt die erste Wärmesenke 3 während der Warmwasserbereitung weiter.

Solange die erste Wärmequelle 1 zur Bereitstellung der benötigten Heizwärme ausreicht, wird zweite Wärmequelle 2 nur zur Brauchwassererwärmung benötigt. Hierfür ist es nötig, die zweite Wärmesenke 27 und den internen Wasserkreis der zweiten Wärmequelle auf einer Temperatur von ca. 40°C - 60°C zu halten, um die Wartezeit, bis warmes Wasser bereitsteht, kurz zu halten. Nach dem Stand der Technik wird dies durch kurzzeitiges Starten des Brenners, also das kurzzeitige erwärmen des zweiten Wärmetauschers 21 erreicht, bis die zweite Wärmesenke die Solltemperatur erreicht hat, was durch den Temperaturnsensor 26 sensiert wird. Bei der erfindungsgemäßen Anordnung kann das Vorheizen auch durch die erste Wärmequelle erfolgen, wenn diese in Betrieb ist.

### Beispielhafte Auslegungsdaten:

Die unten angegebenen Daten sind passend für ein KWK-System für eine Wohnung oder ein Einfamilienhaus. Die weiteren Beschreibungen beziehen sich auf die unten angegebenen Auslegungsdaten, die den typischen Anwendungsfall repräsentieren. Das beschriebene Verfahren ist aber nicht auf die angegebenen Leistungsbereiche beschränkt.

### Kombiwasserheizer (zweite Wärmequelle 2)

Maximale Wärmeleistung Brenner / zweiter Wärmetauscher 21: 8 ... 20 kW
Volumenstrom zweite Umwälzpumpe 22: 500 ... 1000 l/h
Temperaturdifferenz Vorlauf - Rücklauf: 10 ... 25 K

### KWK-Einheit (erste Wärmequelle 1)

Elektrische Leistung: 1 kW
Wärmeleistung: 5 kW
Volumenstrom erste Umwälzpumpe 12: 400 l/h
Temperaturdifferenz Vorlauf - Rücklauf: 7 ... 12 K

Figur 2 stellt eine Weiterbildung des Heizungssystems aus Figur 1 dar. Der Unterschied besteht darin, dass das zweite Rückschlagventil 29, welches hydraulisch genauso verbunden ist wie in Figur 1, nun innerhalb der ersten Wärmequelle vorgesehen ist. Alternativ ist es auch möglich, das zweite Rückschlagventil 29 woanders außerhalb der zweiten Wärmequelle 2 vorzusehen.

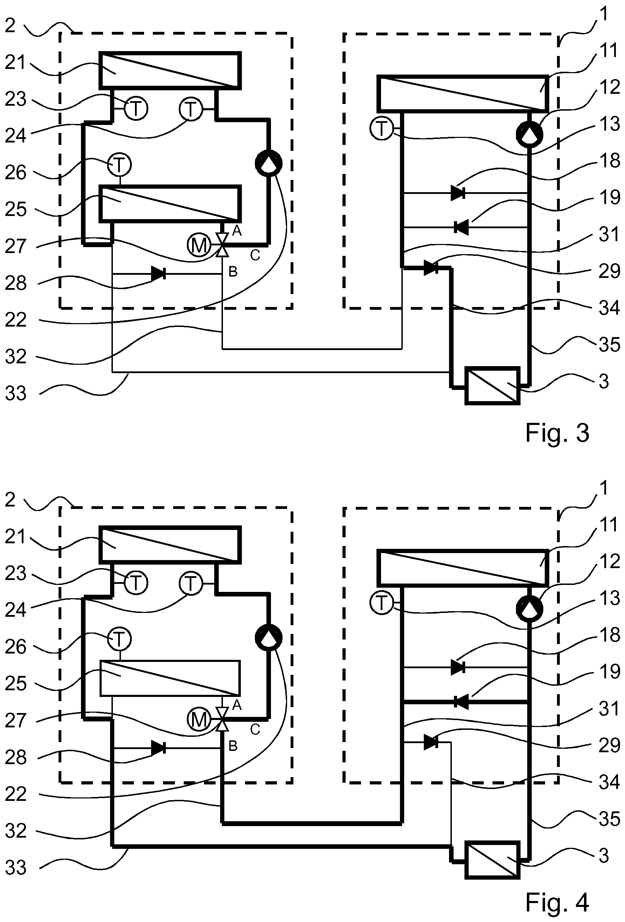

In den Figuren 3 bis 5 sind verschiedene Betriebszustände, die mit dem erfindungsgemäßen Heizungssystem realisierbar sind, dargestellt.

Figur 3 stellt den Heizbetrieb durch die erste Wärmequelle 1 und gleichzeitige Warmwasserbereitung durch die zweite Wärmequelle 2 dar. Das 3-Wege-Ventil 27 ist in Stellung A-C, dadurch ergeben sich zwei Kreisläufe, die über den Vorlaufanschluss 33 der zweiten Wärmequelle 2 verbunden sind. Hierdurch ist ein Druckausgleich sichergestellt, allerdings kommt es zu keiner nennenswerten Durchmischung und beide Kreisläufe können unterschiedliche Temperaturniveaus annehmen.

Die erste Wärmesenke 3 wird durch die erste Wärmequelle 1 bedient. Die erste Umwälzpumpe fördert das Wärmeträgermedium durch den ersten Wärmetauscher 11, das zweite Rückschlagventil 29 und die erste Wärmesenke 3. Das Rückschlagventil 29 öffnet, da durch die erste Umwälzpumpe 12 ein ausreichender Differenzdruck aufgebaut wird. Die Temperaturregelung für den Heizkreis erfolgt anhand des ersten Temperatursensors 13.

Falls der Druckabfall im Heizkreis 300 mbar übersteigt, öffnet der erste Bypass 18. So ist ein ausreichender Volumenstrom durch den ersten Wärmetauscher 11 sichergestellt.

Die zweite Wärmequelle 2 erwärmt Trinkwasser z.B. nach dem Durchflussprinzip. Zunächst wird Wärmeträgermedium im zweiten Wärmetauscher 21, z.B. durch Verbrennung von Erdgas, erhitzt. Die Wärme wird in einem Wärmetauscher (zweite Wärmesenke 25) auf das Trinkwasser übertragen. Dies geschieht unabhängig von der ersten Wärmequelle 1, die während der Warmwasserbereitung die erste Wärmesenke 3 weiter mit Wärme versorgt.

Figur 4 stellt den Heizbetrieb durch die erste Wärmequelle 1 in Kombination mit der zweiten Wärmequelle 2 dar.

Falls die Wärmeleistung der Erste Wärmequelle 1 nicht zur Deckung des Wärmebedarfs der ersten Wärmesenke ausreicht, wird die zweite Wärmequelle 2 zusätzlich zur Erzeugung eingesetzt. Das 3-Wege-Ventil wird in Stellung B-C gefahren und die Umwälzpumpe 22 sowie der Brenner, der z.B. den zweiten Wärmetauscher 21 beheizt, gestartet.

Durch die erste Wärmesenke 3 fließt nun der gleiche Volumenstrom, wie durch den zweite Wärmequelle 2. Dieser ist höher als der von der ersten Umwälzpumpe 12 erzeugte Volumenstrom. Ein Teilvolumenstrom fließt daher durch das Rückschlagventil 19 an der ersten Wärmequelle 1 vorbei. Dies ist vorteilhaft gegenüber einer reinen Reihenschaltung, da in diesem Fall die erste Wärmequelle 1 einen zusätzlichen Druckverlust bedeuten würde, den die zweite Umwälzpumpe 22 überwinden muss.

### Beispielhafte Daten für diesen Betriebszustand:

### Temperaturen:

Solltemperatur Heizkreis (erste Wärmesenke 3): 60 °C
Rücklauf vom Heizkreis (erste Wärmesenke 3): 40 °C
Vorlauf KWK-Einheit (erste Wärmequelle 1): 50,8 °C
Rücklauf Kombiwasserheizer (zweite Wärmequelle 2): 45,4 °C
Vorlauf Kombiwasserheizer (zweite Wärmequelle 2): 60 °C

### Volumenströme:

Heizkreis (erste Wärmesenke 3): 800 l/h
KWK- Einheit (erste Wärmequelle 1): 400 l/h
Kombiwasserheizer (zweite Wärmequelle 2): 800 l/h
Erstes Rückschlagventil 19: 400 l/h

### Wärmeleistungen:

KWK-Einheit (erste Wärmequelle 1): 5kW
Kombiwasserheizer (zweite Wärmequelle 2): 13,6 kW

Das Regelungsverfahren läuft wie folgt ab. Beide Wärmequellen 1, 2 sind mit einer unabhängigen Vorlauftemperaturregelung ausgestattet. Die Stellgröße ist die Leistung des jeweiligen Wärmeerzeugers. Im dargestellten Beispiel kann die Wärmeleistung des Kombiwasserheizers (zweite Wärmequelle 2) im Bereich 8 - 20 kW kontinuierlich verstellt werden, wohingegen die KWK- Einheit (erste Wärmequelle 1) lediglich einen Betriebspunkt mit 5 kW thermischer Leistung aufweist. Optimierungsziel bei wärmegeführten KWK-Systemen ist grundsätzlich die Laufzeitmaximierung der KWK-Einheit. Die KWK-Einheit hat daher im Heizbetrieb Vorrang vor dem Kombiwasserheizer. Durch die erfindungsgemäße hydraulische Anordnung kann ein entsprechendes Regelverhalten ohne übergeordneten Kaskadenregler realisiert werden. Der Kombiwasserheizer (zweite Wärmequelle 2) erhält bei gleichzeitigem Betrieb beider Wärmequellen vorgewärmtes Rücklaufwasser. Außerdem ist die Temperaturspreizung im Kombiwasserheizer (zweite Wärmequelle 2) größer. Dadurch ergibt sich, dass am zweiten Temperatursensor 23 immer eine höhere Temperatur anliegt als am ersten Temperatursensor 13. Dies bewirkt, dass bei gleicher Solltemperatur der Kombiwasserheizer (zweite Wärmequelle 2) zuerst in Regelabschaltung geht, wenn die Vorlauftemperatur den Sollwert erreicht hat und die KWK-Einheit (erste Wärmequelle 1) daher immer vorrangig betrieben wird. Es empfiehlt sich dennoch einen übergeordneten Kaskadenregler zur optimalen Anpassung des Regelverhaltens an das System einzusetzen, dies ist aber nicht zwingend notwendig.

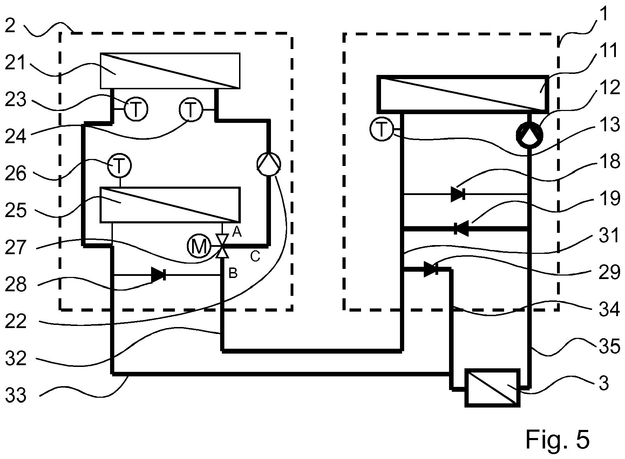

Figur 5 stellt die Komfortschaltung Warmwasser dar.

Kombiwasserheizer (zweite Wärmequelle 2) sind üblicherweise mit einer Vorwärmfunktion für Warmwasser ausgestattet. Hierdurch wird die Zeit, bis Warmwasser mit Solltemperatur zur Verfügung steht, verkürzt. Abhängig vom Betriebszustand kann die Vorwärmung auf unterschiedliche Art realisiert werden. Im Sommerbetrieb gibt es keine Heizungsanforderung. Zur Vorwärmung des internen Wasserkreislaufs werden der Brenner (zweiter Wärmetauscher 21) und die zweite Umwälzpumpe 22 kurzzeitig gestartet.

Beim Heizbetrieb ausschließlich durch die KWK-Einheit (erste Wärmequelle 1) würde der Kombiwasserheizer (zweite Wärmequelle 2) auskühlen und müsste durch periodisches Starten des Brenners (zweiter Wärmetauscher 21) auf Temperatur gehalten werden. Es ist vorteilhaft auf das kurzzeitige Starten zu verzichten und den Kombiwasserheizer (zweite Wärmequelle 2) mit Hilfe der KWK-Einheit (erste Wärmequelle 1) vorzuwärmen.

In Figur 5 ist die KWK-Einheit (erste Wärmequelle 1) mit der ersten Umwälzpumpe 12 in Betrieb. Das 3-Wege-Ventil (6) ist in Stellung B-C. Der Volumenstrom durch die Verbindung 31 teilt sich am Rücklaufanschluss des Kombiwasserheizers (zweite Wärmequelle 2) auf. Ein Teil des erwärmten Wassers fließt durch die Leitung 34 und das zweite Rückschlagventil 29 und ein Teil fließt durch die Leitung 32 und somit durch den Primärkreis des Kombiwasserheizers (zweite Wärmequelle 2), da das Rückschlagventil immer einen Strömungswiderstand darstellt. Die genaue Aufteilung der Volumenströme ist unerheblich. Es genügen 5% der von der Umwälzpumpe 12 gelieferten 400 l/h, um das Wasser im Kombiwasserheizer (zweite Wärmequelle 2) mehrmals in der Stunde auszutauschen. Die Vorwärmfunktion ist aktiv, wenn folgende Bedingungen erfüllt sind: Warmwasserfunktion ist eingeschaltet aber keine Trinkwasserzapfung, KWK-Einheit ist in Betrieb und der Brenner des Kombiwasserheizers ist nicht in Betrieb. Das Umschalten des 3-Wege-Ventils 27 von A-C nach A-B und zurück erfolgt, wenn die Temperaturdiffernez 1 K unterschreitet beziehungsweise 5 K überschreitet.

### Bezugszeichenliste

- 1: Erste Wärmequelle
- 2: Zweite Wärmequelle
- 3: Erste Wärmesenke
- 11: Erster Wärmetauscher
- 12: Erste Umwälzpumpe
- 13: Erster Temperatursensor
- 18: Erster Bypass
- 19: Erstes Rückschlagventil
- 21: Zweiter Wärmetauscher
- 22: Zweite Umwälzpumpe
- 23: Zweiter Ausgangstemperatursensor
- 24: Zweiter Eingangstemperatursensor
- 25: Zweite Wärmesenke
- 26: Temperatursensor Zweite Wärmesenke
- 27: 3-Wege-Ventil
- 28: Zweiter Bypass
- 29: Zweites Rückschlagventil
- 31: Verbindung erste Wärmequelle - zweite Wärmequelle
- 32: Verbindung erste Wärmequelle - zweite Wärmequelle
- 33: Verbindung zweite Wärmequelle - erste Wärmesenke
- 34: Verbindung erste Wärmequelle - erste Wärmesenke
- 35: Verbindung erste Wärmesenke - erste Wärmequelle

## Patentansprüche

1. Heizungssystem mit zumindest zwei Wärmequellen (1, 2) zur Erwärmung eines mit Hilfe je einer Umwälzpumpe (12, 22) in einem Rohrleitungssystem (31, 32, 33, 34, 35) geförderten flüssigen Wärmeträgermediums, bevorzugt Wasser, wobei die erste (1) oder zweite Wärmequelle (2)jeweils einen Wärmetauscher (11, 21) und die Umwälzpumpe (12, 22) umfassen, und mit einer ersten Wärmesenke (3), wobei eine erste Wärmequelle (1) eine erste Wärmeleistung bereitstellt und wobei eine zweite Wärmequelle (2) eine zweite Wärmeleistung bereitstellt, die bedarfsweise dem Heizungssystem zuschaltbar ist, wobei die erste Wärmequelle (1), die zweite Wärmequelle (2) und die erste Wärmesenke (3) im Rohrleitungssystem in Reihe geschaltet sind, **dadurch gekennzeichnet, dass** jeweils parallel zur ersten (1) und zweiten Wärmequelle (2) ein Rückschlagventil (19, 29) vorgesehen ist, wobei die Durchflussrichtung des Rückschlagventils (19, 29) so gleichgerichtet ist zur Förderrichtung der jeweiligen Umwälzpumpe (12, 22) der ersten (1) oder zweiten Wärmequelle (2), dass der Durchfluss durch die Rückschlagventile (19, 20) sich automatisch aufgrund der Volumenströme der Umwälzpumpen (12, 22) der Wärmequellen (1, 2) ergeben kann.

2. Heizungssystem nach Anspruch 1, **wobei** die Heizleistung der zweiten Wärmequelle (2) und/oder der Volumenstrom der Umwälzpumpe (22) der zweiten Wärmequelle größer ist als die Heizleistung der ersten Wärmequelle (1) und/oder der Volumenstrom der Umwälzpumpe (12) der ersten Wärmequelle.

3. Heizungssystem nach Anspruch 1 oder 2, **wobei** das Heizungsystem eine zweite Wärmesenke (25) umfasst und wobei die zweite Wärmequelle (2) so mit der zweiten Wärmesenke (25) verbindbar ist, bevorzugt mittels eines 3-Wege-Ventils (27), dass die zweite Wärmequelle (2) die zweite Wärmesenke (25) beheizen kann.

4. Heizungssystem nach einem der vorhergehenden Ansprüche, **wobei** die erste Wärmequelle (1) ein Kraft-Wärme-Kopplung-System, ein Solarkollektor oder eine Wärmepumpe ist und/oder die zweite Wärmequelle (2) einen Heizkessel umfasst.

5. Heizungssystem nach einem der vorhergehenden Ansprüche, **wobei** die das der zweiten Wärmequelle (2) hydraulisch zugeordnete Rückschlagventil (29) räumlich außerhalb der zweiten Wärmequelle (2), bevorzugt räumlich innerhalb der ersten Wärmequelle (1) angeordnet ist.

6. Verfahren zum Betreiben eines Heizungssystems nach einem der Ansprüche 1 bis 5, **dadurch gekennzeichnet, dass** die erste Wärmequelle (1) und die zweite Wärmequelle (2) mit demselben Temperatur-Sollwert für die Wärmesenke (3) betrieben werden, so dass die zweite Wärmequelle (2) nur dann betrieben wird, wenn die Temperaturerhöhung durch die erste Wärmequelle (1) nicht ausreicht.

7. Verfahren nach dem Oberbegriff des Anspruchs 6, **dadurch gekennzeichnet, dass** zum Beheizen einer zweiten Wärmesenke (25) ein 3-Wege-Ventil (27) so betrieben wird, dass die zweite Wärmesenke (25) durch die zweite Wärmequelle (2) beheizt wird.

8. Verfahren nach dem Oberbegriff des Anspruchs 6, **dadurch gekennzeichnet, dass** zum Beheizen einer zweiten Wärmesenke (25) ein 3-Wege-Ventil (27) so betrieben wird, dass die zweite Wärmesenke (27) durch die erste Wärmequelle (1) beheizt wird.

9. Verfahren nach dem Oberbegriff des Anspruchs 6, **dadurch gekennzeichnet, dass** die zweite Wärmequelle (2) durch die erste Wärmequelle (1) vorgewärmt wird.

## Claims

1. Heating system with at least two heat sources (1, 2) for heating, by means of a circulation pump (12, 22), a liquid heat carrier medium, preferably water, conveyed in a pipeline system (31, 32, 33, 34, 35), wherein the first (1) or second (2) heat source each comprise a heat exchanger (11, 21) and the circulation pump (12, 22), and with a first heat sink (3), wherein a first heat source (1) provides a first heat output and wherein a second heat source (2) provides a second heat output that can be cut in, if required, to the heating system, wherein the first heat source (1), the second heat source (2) and the first heat sink (3) are connected in series in the pipeline system, **characterised in that** a lift check valve (19, 29) is provided parallel to the first (1) and second (2) heat source, wherein the flow direction of the lift check valve (19, 29) is the same direction as the conveying direction of the corresponding circulation pump (12, 22) of the first (1) or second heat source (2), so that the flow through the lift check valves (19, 20) can result automatically based on the volume flows of the circulation pumps (12, 22) of the heat sources (1, 2).

2. Heating system according to claim 1, **wherein** the heat output of the second heat source (2) and/or the volume flow of the circulation pump (22) of the second heat source is larger than the heat output of the first heat source (1) and/or the volume flow of the circulation pump (12) of the first heat source.

3. Heating system according to claim 1 or 2, **wherein** the heating system comprises a second heat sink (25) and wherein the second heat source (2) can be connected to the second heat sink (25), preferably by means of a 3-way valve (27), such that the second heat source (2) can heat the second heat sink (25).

4. Heating system according to any of the preceding claims, **wherein** the first heat source (1) is a cogeneration system, a solar collector or a heat pump and/or the second heat source (2) comprises a boiler.

5. Heating system according to any of the preceding claims, **wherein** the lift check valve (29) hydraulically allocated to the second heat source (2) is spatially arranged outside the second heat source (2), preferably spatially inside the first heat source (1).

6. Method for operating a heating system according to any of claims 1 to 5, **characterised in that** the first heat source (1) and the second heat source (2) are operated at the same temperature set value for the heat sink (3), such that the second heat source (2) is only operated if the temperature increase by the first heat source (1) is insufficient.

7. Method according to the preamble of claim 6, **characterised in that** a 3-way valve (27) is operated for heating a second heat sink (25) such that the second heat sink (25) is heated by the second heat source (2).

8. Method according to the preamble of claim 6, **characterised in that** a 3-way valve (27) is operated for heating a second heat sink (25) such that the second heat sink (27) is heated by the first heat source (1).

9. Method according to the preamble of claim 6, **characterised in that** the second heat source (2) is preheated by the first heat source (1).

## Revendications

1. Système de chauffage avec au moins deux sources de chaleur (1, 2) afin de chauffer un fluide caloporteur liquide, de préférence de l'eau, transporté à chaque fois à l'aide d'une pompe de circulation (12, 22) dans un système de conduites (31, 32, 33, 34, 35), la première source de chaleur (1) et la deuxième source de chaleur (2) comprenant chacune un échangeur de chaleur (11, 21) et la pompe de circulation (12, 22), et avec un premier puits de chaleur (3), une première source de chaleur (1) fournissant une première puissance thermique et une deuxième source de chaleur (2) fournissant une deuxième puissance thermique, qui peut être ajoutée au système de chauffage selon les besoins, la première source de chaleur (1), la deuxième source de chaleur (2) et le premier puits de chaleur (3) étant branchés en série dans le système de conduites,
**caractérisé en ce qu'**il est prévu un clapet anti-retour (19, 29) à chaque fois parallèlement à la première source de chaleur (1) et à la deuxième source de chaleur (2),
dans lequel le sens de passage du clapet anti-retour (19, 29) est dirigé de telle sorte par rapport au sens de transport de la pompe de circulation (12, 22) respective de la première source de chaleur (1) ou de la deuxième source de chaleur (2) que le passage par les clapets anti-retour (19, 20) peut résulter automatiquement des flux volumiques des pompes de circulation (12, 22) des sources de chaleur (1, 2).

2. Système de chauffage selon la revendication 1, dans lequel la puissance de chauffage de la deuxième source de chaleur (2) et/ou le flux volumique de la pompe de circulation (22) de la deuxième source de chaleur sont plus grands que la puissance de chauffage de la première source de chaleur (1) et/ou le flux volumique de la pompe de circulation (12) de la première source de chaleur.

3. Système de chauffage selon la revendication 1 ou 2, dans lequel le système de chauffage comprend un deuxième puits de chaleur (25) et dans lequel la deuxième source de chaleur (2) peut être reliée de telle sorte au deuxième puits de chaleur (25), de préférence au moyen d'une soupape à 3 voies (27), que la deuxième source de chaleur (2) peut chauffer le deuxième puits de chaleur (25).

4. Système de chauffage selon l'une quelconque des revendications précédentes, dans lequel la première source de chaleur (1) est un système de cogénération d'électricité et de chaleur, un capteur solaire ou une pompe à chaleur et/ou la deuxième source de chaleur (2) comprend une chaudière de chauffage.

5. Système de chauffage selon l'une quelconque des revendications précédentes, dans lequel le clapet anti-retour (29) associé sur le plan hydraulique à la deuxième source de chaleur (2) est agencé spatialement à l'extérieur de la deuxième source de chaleur (2), de préférence spatialement à l'intérieur de la première source de chaleur (1).

6. Procédé de fonctionnement d'un système de chauffage selon l'une quelconque des revendications 1 à 5, **caractérisé en ce qu'**on exploite la première source de chaleur (1) et la deuxième source de chaleur (2) avec la même valeur de consigne de température pour le puits de chaleur (3) de telle sorte qu'on exploite la deuxième source de chaleur (2) que si l'augmentation de température par la première source de chaleur (1) ne suffit pas.

7. Procédé selon le préambule de la revendication 6, **caractérisé en ce que**, pour chauffer un deuxième puits de chaleur (25), on exploite une soupape à 3 voies (27) de telle sorte que le deuxième puits de chaleur (25) est chauffé par la deuxième source de chaleur (2).

8. Procédé selon le préambule de la revendication 6, **caractérisé en ce que**, pour chauffer un deuxième puits de chaleur (25), on exploite une soupape à 3 voies (27) de telle sorte que le deuxième puits de chaleur (27) est chauffé par la première source de chaleur (1).

9. Procédé selon le préambule de la revendication 6, **caractérisé en ce que** la deuxième source de chaleur (2) est préchauffée par la première source de chaleur (1).
